# EUROPEAN PATENT APPLICATION

(11) **EP 4 239 617 A1**
(43) Date of publication of application: **06.09.2023**
(21) Application number: 21885681.3
(22) Date of filing: 30.08.2021
(51) Int. Cl.: G09B 7/02, G09B 19/00

(54) **ACADEMIC ABILITY ESTIMATION MODEL GENERATION DEVICE, ACADEMIC ABILITY ESTIMATION DEVICE, ACADEMIC ABILITY ESTIMATION MODEL GENERATION METHOD, ACADEMIC ABILITY ESTIMATION METHOD, AND PROGRAM**

(30) Priority: 29.10.2020 JP 2020181375
(71) Applicant: Z-KAI Inc., Mishima-shi, Shizuoka 411-0033 (JP)
(72) Inventor: WATANABE, Jun, Mishima-shi, Shizuoka 411-0033 (JP); UEDA, Tomoya, Mishima-shi, Shizuoka 411-0033 (JP); WATANABE, Shoko, Mishima-shi, Shizuoka 411-0033 (JP)
(74) Representative: MERH-IP Matias Erny Reichl Hoffmann Patentanwälte PartG mbB
(86) International application number: PCT/JP2021/031717
(87) International publication number: WO 2022/091562

(57) **Abstract**

An academic ability estimation model generation device that is capable of generating an academic ability estimation model with which current academic ability is accurately estimated without requiring comprehensive learning data is provided. The academic ability estimation model generation device includes: a decision tree generation unit that generates a decision tree by using correct/incorrect-answer information as teacher data, the correct/incorrect-answer information indicating that a plurality of answerers who have answered a question group consisting of a plurality of predetermined questions have answered each question correctly or incorrectly; a pruning unit that deletes a leaf node when an entropy of a classification result indicated by the leaf node being a terminal end of the decision tree which is generated is equal to or lower than a predetermined value; and a category generation unit that sets each new terminal end of the decision tree after deleting the leaf node as a category to which any of the answerers belongs.

## Description

### [TECHNICAL FIELD]

The present invention relates to an academic ability estimation model generation device that generates a model for academic ability estimation, an academic ability estimation device that estimates academic ability by using an academic ability estimation model, an academic ability estimation model generation method, an academic ability estimation method, and a program.

### [BACKGROUND ART]

Patent Literature 1, for example, is disclosed as a related art of a learning support system. The learning support system of Patent Literature 1 includes a server device and a terminal device. The terminal device sends information about school of choice to the server device; receives lesson information including a plurality of lessons identified based on the information about school of choice and check test information corresponding to the lesson information, from the server device; executes a check test based on the check test information; determines an academic ability level of a learner based on a result of the check test; and generates a first screen indicating a lesson that the learner should learn in a predetermined period, based on the lesson information and the determined academic ability level.

### [PRIOR ART LITERATURE]

### [PATENT LITERATURE]

Patent Literature 1: Japanese Patent Application Laid Open No. 2019-128365

### [SUMMARY OF THE INVENTION]

### [PROBLEMS TO BE SOLVED BY THE INVENTION]

Conventional academic ability estimation has been complicated due to the need to collect learning data which is obtained by comprehensively learning a range of questions for the school of choice. In addition, past learning data becomes obsolete over time, which has caused degradation in accuracy of current academic ability estimation.

An object of the present invention is to provide an academic ability estimation model generation device that is capable of generating an academic ability estimation model with which current academic ability is accurately estimated without requiring comprehensive learning data.

### [MEANS TO SOLVE THE PROBLEMS]

An academic ability estimation model generation device according to the present invention includes a decision tree generation unit, a pruning unit, and a category generation unit.

The decision tree generation unit generates a decision tree by using correct/incorrect-answer information as teacher data, the correct/incorrect-answer information indicating that a plurality of answerers who have answered a question group consisting of a plurality of predetermined questions have answered each question correctly or incorrectly. The pruning unit deletes a leaf node when an entropy of a classification result indicated by the leaf node being a terminal end of the decision tree which is generated is equal to or lower than a predetermined value. The category generation unit sets each new terminal end of the decision tree after deleting the leaf node as a category to which any of the answerers belongs.

### [EFFECTS OF THE INVENTION]

According to the academic ability estimation model generation device of the present invention, an academic ability estimation model with which current academic ability is accurately estimated without requiring comprehensive learning data can be generated.

### [BRIEF DESCRIPTION OF THE DRAWINGS]

FIG. 1 is a block diagram illustrating a configuration of an academic ability estimation model generation device according to a first embodiment.
FIG. 2 is a flowchart showing an operation of the academic ability estimation model generation device according to the first embodiment.
FIG. 3 is a diagram illustrating an example of a decision tree in which terminal ends after deleting leaf nodes are set as categories.
FIG. 4 is a diagram illustrating an example of a decision tree to which an auxiliary decision tree is connected.
FIG. 5 is a block diagram illustrating a configuration of an academic ability estimation device according to the first embodiment.

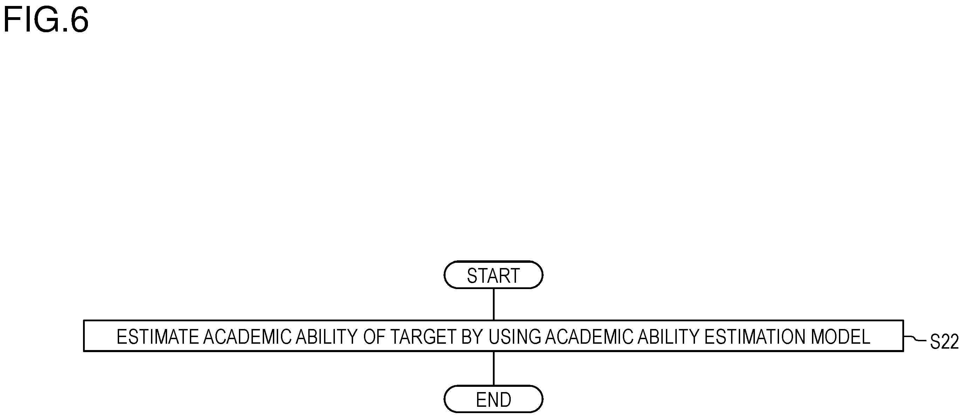

FIG. 6 is a flowchart showing an operation of the academic ability estimation device according to the first embodiment.
FIG. 7 is a diagram illustrating a functional configuration example of a computer.

### [DETAILED DESCRIPTION OF THE EMBODIMENTS]

An embodiment according to the present invention will be described in detail below. Here, components having the mutually-same functions will be provided with the same reference numerals and the duplicate description thereof will be omitted.

### [First embodiment]

### [Academic ability estimation model generation device]

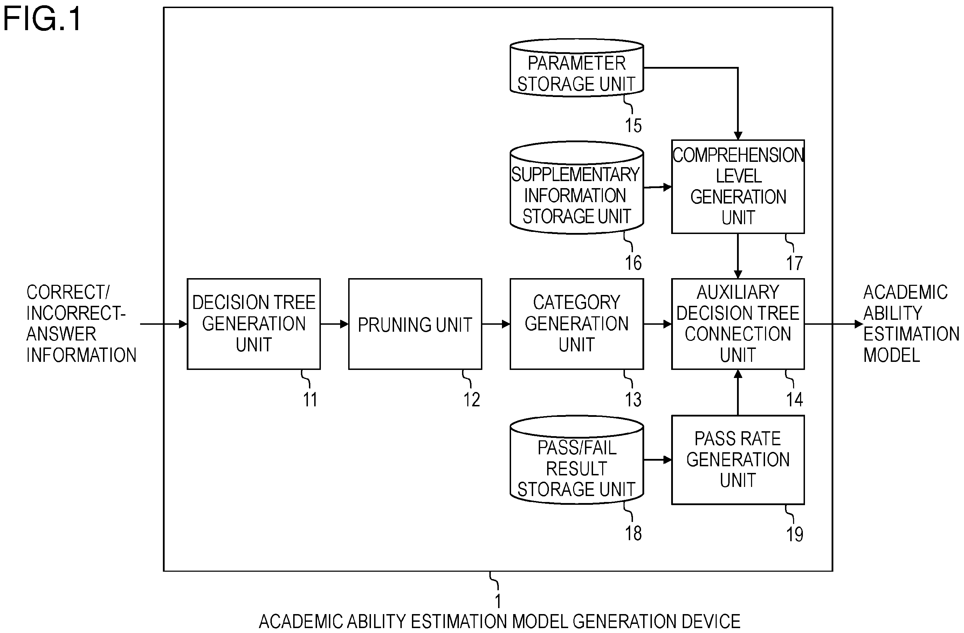

The configuration of an academic ability estimation model generation device according to a first embodiment will be described with reference to FIG. 1. As illustrated in the drawing, an academic ability estimation model generation device 1 according to the present embodiment includes a decision tree generation unit 11, a pruning unit 12, a category generation unit 13, an auxiliary decision tree connection unit 14, a parameter storage unit 15, a supplementary information storage unit 16, a comprehension level generation unit 17, a pass/fail result storage unit 18, and a pass rate generation unit 19.

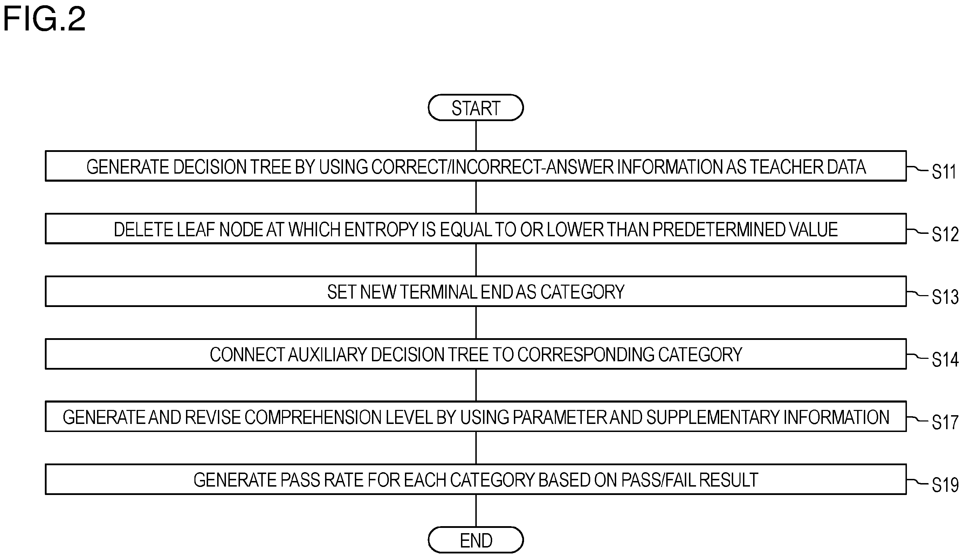

An operation of each component will be described below with reference to FIG. 2.

### <Decision tree generation unit 11>

The decision tree generation unit 11 generates a decision tree by using correct/incorrect-answer information as teacher data (S11). The correct/incorrect-answer information indicates that a plurality of answerers, who have answered a question group consisting of a plurality of predetermined questions, have answered each question correctly or incorrectly.

### <Pruning unit 12>

When an entropy of a classification result indicated by a leaf node which is a terminal end of the generated decision tree is equal to or lower than a predetermined value, the pruning unit 12 deletes the leaf node (S12).

### <Category generation unit 13>

The category generation unit 13 sets each of new terminal ends of the decision tree after deleting the leaf node as a category to which any of the answerers belongs (S13).

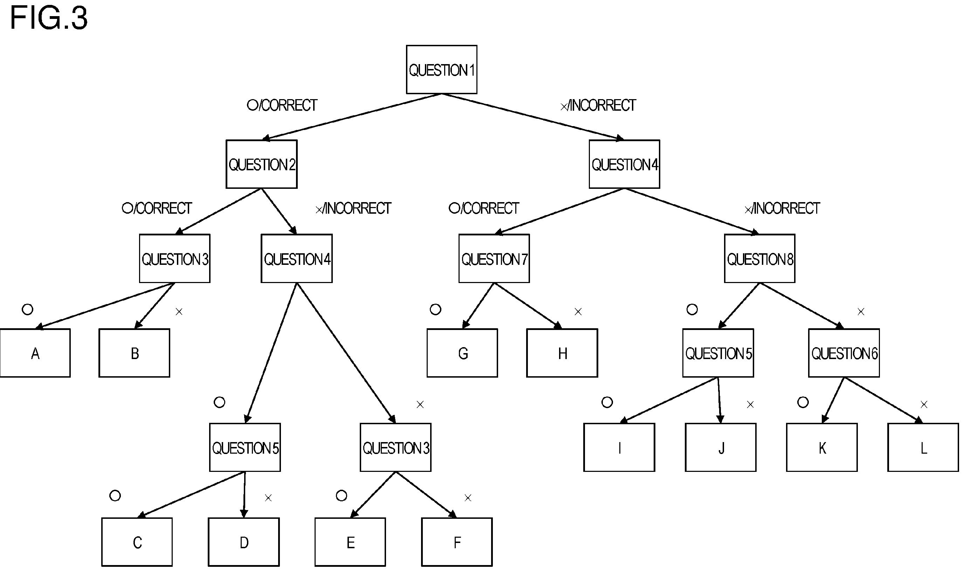

FIG. 3 illustrates an example of the decision tree obtained by executing steps S11 to S13. In the example of FIG. 3, the question group has 8 questions in total. Step S12 is executed to delete leaf nodes at which an entropy of a classification result is equal to or lower than a predetermined value, and step S13 is executed to set new terminal ends as categories A to L.

The leaf nodes at which the entropy is equal to or lower than the predetermined value are deleted in step S12 and therefore, each route of this decision tree does not include all of Questions 1 to 8. For example, an answerer who has correctly answered Questions 1, 2, and 3 consecutively is immediately placed in category A. It is considered that this is because a group of answerers who have correctly answered Questions 1 to 3 consecutively have shown little variation in their correct/incorrect-answer information in their answers for subsequent questions (because the entropy is small). For example, it is conceivable that the group that has been able to correctly answer Questions 1 to 3 consecutively has academic ability to correctly answer the rest of the questions (Questions 4 to 8) as well and therefore the entropy has been converged to a small value during the time from Question 1 to Question 3.

As another example, a group that has correctly answered Question 1, incorrectly answered Question 2, and correctly answered Questions 4 and 5 consecutively is placed in category C because the entropy is lower than the predetermined value. In this case, it is conceivable that the group belonging to category C is converged to have either a correct answer or an incorrect answer with little variation for Questions 3 and 6 to 8 that are not on the route of the decision tree. For example, such a pattern is conceivable that in conjunction with the incorrect answer for Question 2, answers for relevant Question 3 are almost converged to incorrect answers, and in conjunction with the correct answers for Questions 1, 4, and 5, answers for relevant Questions 6 to 8 are all converged to correct answers.

### <Auxiliary decision tree connection unit 14>

When a value of an entropy in a certain category is greater than a predetermined value or when the number of answerers belonging to a certain category is smaller than a predetermined value, the auxiliary decision tree connection unit 14 connects a subtree, which is located on the terminal end side of any of the nodes passed through before reaching the certain category and does not reach the certain category, to the certain category as an auxiliary decision tree, leading the answerer belonging to the certain category to a category located at the terminal end of the auxiliary decision tree (S14).

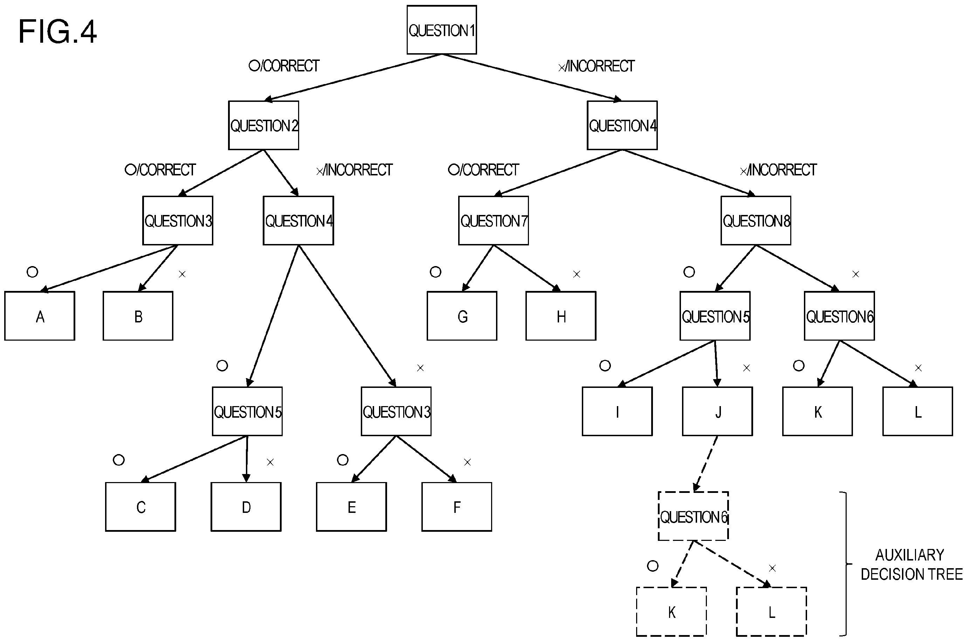

FIG. 4 illustrates an example of the auxiliary decision tree connected in step S14. In the example of this drawing, it is assumed that a value of an entropy in category J is greater than a predetermined value or the number of answerers belonging to category J is smaller than a predetermined value. Conceivable cases of this example include a case in which category J shows a trend which is far from the general trend of the correct/incorrect-answer information for Questions 1 to 8 and therefore various types of answerers are incidentally included and a case in which the number of answerers corresponding to category J is basically small and therefore entropies have not been converged (for example, a case in which there are a very small number of answerers having mutually-different correct/incorrect-answer information at terminal ends than J such as a case in which there is one answerer each).

In the example of the drawing, a subtree that is located on the terminal end side of any of the nodes passed through before reaching category J such as a node "Question 8" and does not reach category J ("Question 6" → category K, "Question 6" → category L) is connected to category J as an auxiliary decision tree and leads answerers belonging to category J to either one of categories K and L located at the terminal ends of the auxiliary decision tree.

For example, when entropies are not converged because it is considered that there are many cases in which answerers have correctly answered questions corresponding to applied questions accidentally even with lack of their academic ability or when entropies are not converged because it is considered that there are many cases in which answerers have incorrectly answered questions accidentally due to making a less common mistake even with sufficient academic ability, the answerers belonging to these kinds of categories can be led to securer categories indicated by auxiliary decision trees, thus being preferable.

In the example of the drawing, such a case is conceivable that making a correct answer for Question 8 even when Questions 1, 4, and 5 are incorrectly answered is basically rare (for example, Question 8 is an applied question of Questions 1, 4, and 5), for example. In this case, category J is considered to be lowered in its accuracy as a category for classifying answerers. These answerers can be replaced on other categories such as categories K and L by leading them with an auxiliary decision tree as illustrated in the drawing. For example, when the answerers belonging to category J are changed to belong category L following an auxiliary decision tree, a correct answer for Question 8 can be considered as a correct answer which can be made even without sufficient academic ability due to deficiencies in questions and scoring methods and the like, that is, the correct answer for Question 8 can be considered to be a correct answer as an outlier or an abnormal value.

### <Parameter storage unit 15>

The parameter storage unit 15 stores a parameter which associates correct/incorrect-answer information of each question with a comprehension level in each learning field (S15). Using the examples of FIGs. 3 and 4, questions and fields may be completely associated in 1:1 such as Question 1 → field a, Question 2 → field b, ..., and Question 8 → field h, or a plurality of fields may be associated with one question such as Question 1 -> fields a, b, c, ..., for example.

### <Supplementary information storage unit 16>

The supplementary information storage unit 16 stores supplementary information which is information about answerers' learning progress in each learning field or answerers' subjective comprehension levels in each learning field (S16).

### <Comprehension level generation unit 17>

The comprehension level generation unit 17 generates comprehension levels in each learning field of answerers belonging to each category by using parameters and revises the generated comprehension levels in each learning field based on supplementary information (S17).

An example of comprehension levels generated by using parameters is shown in the table below.

**Table 1**

| Category | Academic result | Entropy | Field a | Field b | Field c | ... | Field h | ... |
|---|---|---|---|---|---|---|---|---|
| A | 95 | 0.2 | 5 | 4 | 5 | ... | 5 | ... |
| B | 80 | 0.3 | 5 | 3 | 3 | ... | 5 | ... |
| C | 80 | 0.4 | 5 | 3 | 4 | ... | 4 | ... |
| ... | ... | ... | ... | ... | ... | ... | ... | ... |
| K | 25 | 0.6 | 1 | 2 | 2 | ... | 2 | ... |
| ... | ... | ... | ... | ... | ... | ... | ... | ... |

An example of comprehension levels revised based on supplementary information is shown in the table below. For example, in a case in which an answerer placed in category A has answered as Question 1 = "unlearned" as supplementary information, his/her comprehension level is revised as the following table, for example, when Question 1 is related to fields a, b, and c.

**[Table 2]**

| Category | Academic result | Entropy | Field a | Field b | Field c | ... | Field h | ... |
|---|---|---|---|---|---|---|---|---|
| A | 95 | 0.2 | 3 | 2 | 3 | ... | 5 | ... |

Further, in a case in which an answerer placed in category A has answered as Question 1 = "no confidence" as supplementary information, his/her comprehension level is revised as the following table, for example.

**[Table 3]**

| Category | Academic result | Entropy | Field a | Field b | Field c | ... | Field h | ... |
|---|---|---|---|---|---|---|---|---|
| A | 95 | 0.2 | 4 | 3 | 4 | ... | 5 | ... |

Further, the comprehension level generation unit 17 may display difference between a target category and a category to which an answerer currently belongs (difference of comprehension levels in each learning field) for an answerer belonging to a predetermined category (see the table below).

**[Table 4]**

| Category | Academic result | Entropy | Field a | Field b | Field c | ... | Field h | ... |
|---|---|---|---|---|---|---|---|---|
| Current (K) | 25 | 0.6 | 1 | 2 | 2 | ... | 2 | ... |
| Target (A) | 95 | 0.2 | 5 | 4 | 5 | ... | 5 | ... |

### <Pass/fail result storage unit 18>

The pass/fail result storage unit 18 stores a pass/fail result which is an answerer's pass/fail result for an examination of a predetermined school (S18).

### <Pass rate generation unit 19>

The pass rate generation unit 19 generates a pass rate of answerers belonging to a category with respect to a predetermined school for each category and outputs the pass rate for each category (S19). An example of generated pass rates is shown in the table below.

**[Table 5]**

| Category | Academic result | Entropy | Pass rate for T university |
|---|---|---|---|
| A | 95 | 0.2 | A (70% to 80%) |
| B | 80 | 0.3 | B (50% to 60%) |
| C | 80 | 0.4 | B (50% to 60%) |
| ... | ... | ... | ... |
| K | 25 | 0.6 | E (0%) |
| ... | ... | ... | ... |

For example, schools may be classified into a plurality of classes by using criteria such as deviation values, arts or sciences, and national public schools or private schools, and pass rates may be generated for respective classes. An example of the generated pass rates in this case is shown in the table below.

**[Table 6]**

| Category | Academic result | Entropy | Pass rate of top-ranked national public schools |
|---|---|---|---|
| A | 95 | 0.2 | A+ (80% to 90%) |
| B | 80 | 0.3 | B+ (60% to 70%) |
| C | 80 | 0.4 | B+ (60% to 70%) |
| ... | ... | ... | ... |
| K | 25 | 0.6 | E (0%) |
| ... | ... | ... | ... |

### [Academic ability estimation device]

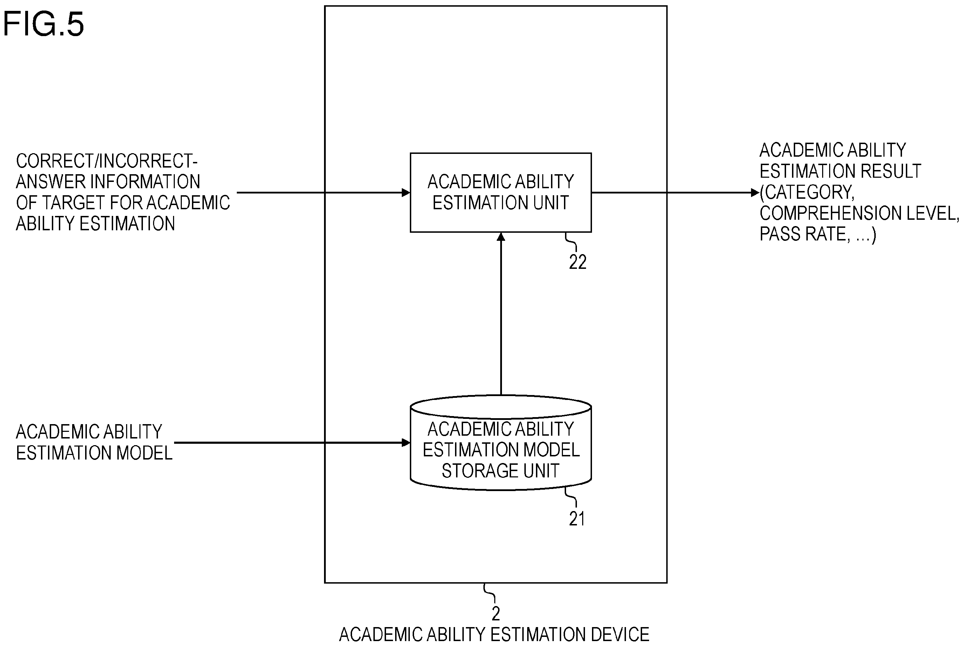

A configuration of an academic ability estimation device 2 will be described below with reference to FIG. 5. The academic ability estimation device 2 is a device that estimates academic ability by using an academic ability estimation model generated by the above-described academic ability estimation model generation device 1.

As illustrated in the drawing, the academic ability estimation device 2 includes an academic ability estimation model storage unit 21 and an academic ability estimation unit 22.

### <Academic ability estimation model storage unit 21>

The academic ability estimation model storage unit 21 stores an academic ability estimation model that is generated by deleting leaf nodes at which an entropy of a classification result, which is indicated by the leaf nodes being terminal ends of a decision tree, is equal to or lower than a predetermined value and by setting each of new terminal ends of the decision tree after deleting the leaf nodes as a category to which any of a plurality of answerers belongs (that is, an academic ability estimation model generated by the academic ability estimation model generation device 1). The decision tree is generated by using correct/incorrect-answer information as teacher data, where the correct/incorrect-answer information indicates that the answerers, who have answered a question group consisting of a plurality of predetermined questions, have answered each question correctly or incorrectly.

### <Academic ability estimation unit 22>

The academic ability estimation unit 22 acquires correct/incorrect-answer information of a target for academic ability estimation and estimates academic ability of the target based on an academic ability estimation model (S22). However, the correct/incorrect-answer information of the target for academic ability estimation is assumed to be correct/incorrect-answer information about the same question group as the question group used when generating the academic ability estimation model and it is assumed that the questions are presented at the same time. For example, it is assumed that when correct/incorrect-answer information used in generating a model is correct/incorrect-answer information obtained in the summer of the second year of high school, correct/incorrect-answer information obtained in the summer of the second year of high school of the target for academic ability estimation is inputted.

### <Appendix>

The device according to the present invention has, as a single hardware entity, for example, an input unit to which a keyboard or the like is connectable, an output unit to which a liquid crystal display or the like is connectable, a communication unit to which a communication device (for example, communication cable) capable of communication with the outside of the hardware entity is connectable, a central processing unit (CPU, which may include cache memory and/or registers), RAM or ROM as memories, an external storage device which is a hard disk, and a bus that connects the input unit, the output unit, the communication unit, the CPU, the RAM, the ROM, and the external storage device so that data can be exchanged between them. The hardware entity may also include, for example, a device (drive) capable of reading and writing a recording medium such as a CD-ROM as necessary. A physical entity having such hardware resources may be a general-purpose computer, for example.

The external storage device of the hardware entity has stored therein programs necessary for embodying the aforementioned functions and data necessary in the processing of the programs (in addition to the external storage device, the programs may be prestored in ROM as a storage device exclusively for reading out, for example). Also, data or the like resulting from the processing of these programs are stored in the RAM and the external storage device as appropriate.

In the hardware entity, the programs and data necessary for processing of the programs stored in the external storage device (or ROM and the like) are read into memory as necessary to be interpreted and executed/processed as appropriate by the CPU. As a consequence, the CPU embodies predetermined functions (the individual components represented above as units, means, or the like).

The present invention is not limited to the above embodiment, but modifications may be made within the scope of the gist of the present invention as appropriate. Also, the processes described in the embodiment may be executed not only in a chronological sequence in accordance with the order of their description but may be executed in parallel or separately according to the processing capability of the device executing the processing or any necessity.

As already mentioned, when the processing functions of the hardware entities described in the embodiment (the device of the present invention) are to be embodied with a computer, the processing details of the functions to be provided by the hardware entities are described by a program. By the program then being executed on the computer, the processing functions of the hardware entity are embodied on the computer.

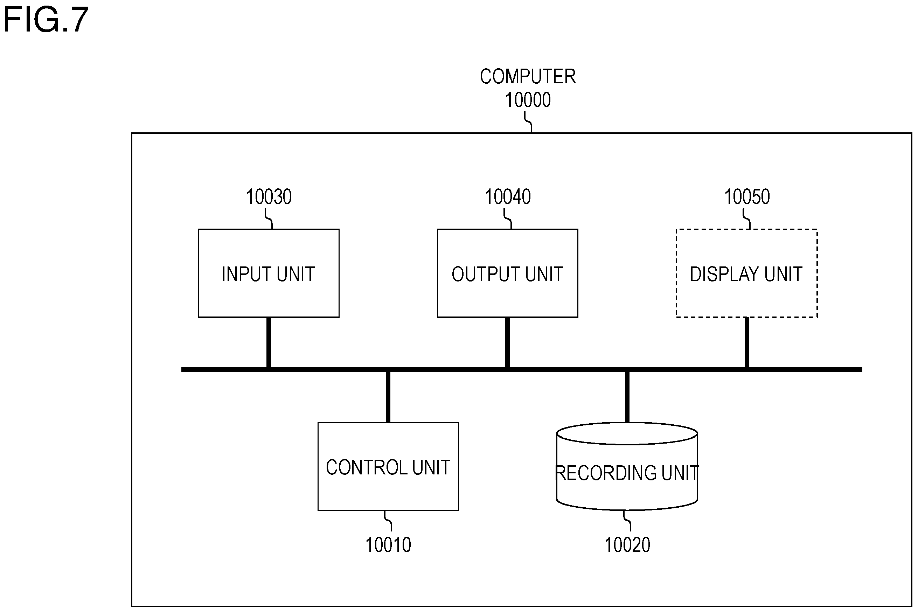

The various kinds of processing mentioned above can be implemented by loading a program for executing the steps of the above method into a recording unit 10020 of a computer 10000 shown in FIG. 7 to operate a control unit 10010, an input unit 10030, an output unit 10040, and the like.

The program describing the processing details can be recorded on a computer-readable recording medium. The computer-readable recording medium may be any kind, such as a magnetic recording device, an optical disk, a magneto-optical recording medium, or a semiconductor memory. More specifically, a magnetic recording device may be a hard disk device, flexible disk, or magnetic tape; an optical disk may be a DVD (digital versatile disc), a DVD-RAM (random access memory), a CD-ROM (compact disc read only memory), or a CD-R (recordable)/RW (rewritable); a magneto-optical recording medium may be an MO (magneto-optical disc); and a semiconductor memory may be EEP-ROM (electrically erasable and programmable-read only memory), for example.

Also, the distribution of this program is performed by, for example, selling, transferring, or lending a portable recording medium such as a DVD or a CD-ROM on which the program is recorded. Furthermore, a configuration may be adopted in which this program is distributed by storing the program in a storage device of a server computer and transferring the program to other computers from the server computer via a network.

The computer that executes such a program first, for example, temporarily stores the program recorded on the portable recording medium or the program transferred from the server computer in a storage device thereof. At the time of execution of processing, the computer then reads the program stored in the storage device thereof and executes the processing in accordance with the read program. Also, as another form of execution of this program, the computer may read the program directly from the portable recording medium and execute the processing in accordance with the program and, furthermore, every time the program is transferred to the computer from the server computer, the computer may sequentially execute the processing in accordance with the received program. Also, a configuration may be adopted in which the transfer of a program to the computer from the server computer is not performed and the above-described processing is executed by so-called application service provider (ASP)-type service by which the processing functions are implemented only by an instruction for execution thereof and result acquisition. Note that a program in this form shall encompass information that is used in processing by an electronic computer and acts like a program (such as data that is not a direct command to a computer but has properties prescribing computer processing).

Further, although the hardware entity was described as being configured via execution of a predetermined program on a computer in this form, at least some of these processing details may instead be embodied with hardware.

## Claims

1. An academic ability estimation model generation device comprising:
a decision tree generation unit that generates a decision tree by using correct/incorrect-answer information as teacher data, the correct/incorrect-answer information indicating that a plurality of answerers who have answered a question group consisting of a plurality of predetermined questions have answered each question correctly or incorrectly;
a pruning unit that deletes a leaf node when an entropy of a classification result indicated by the leaf node being a terminal end of the decision tree which is generated is equal to or lower than a predetermined value; and
a category generation unit that sets each new terminal end of the decision tree after deleting the leaf node as a category to which any of the answerers belongs.

2. The academic ability estimation model generation device according to Claim 1, comprising:
an auxiliary decision tree connection unit that, when a value of the entropy in a certain category of said categories is greater than a predetermined value or when the number of the answerers belonging to a certain category of said categories is smaller than a predetermined value, connects a subtree, which is located on a terminal end side of any of nodes passed through before reaching the certain category and does not reach the certain category, to the certain category as an auxiliary decision tree so as to lead the answerers belonging to the certain category to a category located at a terminal end of the auxiliary decision tree.

3. The academic ability estimation model generation device according to Claim 1 or 2, comprising:
a parameter storage unit that stores a parameter which associates correct/incorrect-answer information of each question with a comprehension level in each learning field; and
a comprehension level generation unit that generates comprehension levels in each learning field of the answerers belonging to each category by using the parameter.

4. The academic ability estimation model generation device according to Claim 3, comprising:
a supplementary information storage unit that stores supplementary information which is information about learning progress in each learning field of the answerers or a subjective comprehension level in each learning field of the answerers, wherein
the comprehension level generation unit revises a generated comprehension level in each learning field based on the supplementary information.

5. The academic ability estimation model generation device according to any one of Claims 1 to 4, comprising:
a pass/fail result storage unit that stores a pass/fail result which is a result of the answerers for an examination of a predetermined school; and
a pass rate generation unit that generates, for each category, a pass rate of an answerer belonging to a corresponding category with respect to the predetermined school and outputs the pass rate for each category.

6. An academic ability estimation device comprising:
an academic ability estimation model storage unit that stores an academic ability estimation model that is generated by deleting a leaf node at which an entropy of a classification result, the classification result being indicated by the leaf node being a terminal end of a decision tree, is equal to or lower than a predetermined value and by setting each new terminal end of the decision tree after deleting the leaf node as a category to which any of a plurality of answerers belongs, where the decision tree is generated by using correct/incorrect-answer information as teacher data, the correct/incorrect-answer information indicating that the answerers, who have answered a question group consisting of a plurality of predetermined questions, have answered each question correctly or incorrectly; and
an academic ability estimation unit that acquires the correct/incorrect-answer information of a target for academic ability estimation and estimates academic ability of the target based on the academic ability estimation model.

7. An academic ability estimation model generation method comprising:
a step of generating a decision tree by using correct/incorrect-answer information as teacher data, the correct/incorrect-answer information indicating that a plurality of answerers who have answered a question group consisting of a plurality of predetermined questions have answered each question correctly or incorrectly;
a step of deleting a leaf node when an entropy of a classification result indicated by the leaf node being a terminal end of the decision tree which is generated is equal to or lower than a predetermined value; and
a step of setting each new terminal end of the decision tree after deleting the leaf node as a category to which any of the answerers belongs.

8. An academic ability estimation method comprising:
a step of estimating academic ability of a target for academic ability estimation by using correct/incorrect-answer information of the target, based on an academic ability estimation model that is generated by deleting a leaf node at which an entropy of a classification result, the classification result being indicated by the leaf node being a terminal end of a decision tree, is equal to or lower than a predetermined value and by setting each new terminal end of the decision tree after deleting the leaf node as a category to which any of a plurality of answerers belongs, where the decision tree is generated by using the correct/incorrect-answer information as teacher data, the correct/incorrect-answer information indicating that the answerers, who have answered a question group consisting of a plurality of predetermined questions, have answered each question correctly or incorrectly.

9. A program for making a computer function as the academic ability estimation model generation device according to any one of Claims 1 to 5.

10. A program for making a computer function as the academic ability estimation device according to Claim 6.
